# EUROPEAN PATENT APPLICATION

(11) **EP 0 639 788 A1**
(43) Date of publication of application: **22.02.1995**
(21) Application number: 94110122.2
(22) Date of filing: 29.06.1994
(51) Int. Cl.: G03B 21/60, G03B 21/56, B64C 1/14, B64D 11/00, B32B 17/10, G09F 19/18

(54) **Picture projecting device and window structure for an aeroplane**

(30) Priority: 19.08.1993 JP 204878/93
(71) Applicant: JAMCO CORPORATION, Mitaka-shi, Tokyo 181 (JP)
(72) Inventor: Umeda, Katsuhiko, Mitaka-shi, Tokyo 181 (JP)
(74) Representative: TER MEER - MÜLLER - STEINMEISTER & PARTNER

(57) **Abstract**

The present invention offers a picture projecting device which projects a clear picture even in a bright environment by cutting out the influence of outside light, regardless of the kind of projector used.

For example, a first polarizing film (22) is attached to the surface of a screen (20) inside an airplane. Further, a second polarizing film (32) is attached to window structure (10) in order to filter the light from outside. The second polarizing film (32) has the same polarizing property as the first polarizing film (22), but they are placed so that the plane of polarization of the second polarizing film (32) differs from that of the first polarizing film (22) by 90°.

In a window structure equipped on the side walls of a cabin in the body of an airplane, the dust cover (320) comprises a transparent resin board (330), a non-elastic film (340) stuck on the surface of the transparent resin board facing the shade (80), and a polarizing film (350) sandwiched between the resin board and the non-elastic film.

## Description

### Background of the Invention

### Field of the Invention

This invention relates to a picture projecting device equipped in an airplane which is capable of projecting a clear picture in a bright environment.

### Description of the Prior Art

When showing picture to passengers in an aircraft, device such as video projector, is used.

When doing so, the sunlight coming in from the window of the airplane reflected on the screen making it difficult to see the projected pictures, so there was a need to close the shades of the windows and turn out the light to make the cabin dark.

However, the darkness of the cabin was inconvenient for the passengers who needed to read printed material or take a memo, and there was a device such as spotlight needed at their side.

So, in Japanese Laid-open Utility Model No. 3-5147, there is an idea mentioned where a polarizing board having the same polarizing trait as that of the output portion of the liquid crystal panel of a liquid crystal projector is used as the screen so that the influence of outer light would be reduced.

The idea taught in the Utility Model could only reduce the influence of outer light when a picture from a liquid crystal projector was projected to a transmitting screen.

But in an airplane where a video projector is used, all the shades on the windows had to be shut as well as turning off the room light to cut off outer light when projecting a video, and passengers were troubled by having to shut the shades on the window by themselves. So, there was inconvenience in having to trouble even the passengers who did not want to see the video.

Therefore, the present invention offers a picture projecting device which projects a clear picture even in a bright environment by cutting out the influence of outer light, regardless of the kind of projector used.

The other object of this invention is to provide a window structure of the airplane to be used for that purpose.

### Summary of the Invention

The picture projecting device of the present invention comprises of a polarizing film put onto the input portion of outer incident light upon the screen having a plane of polarization with a phase differing by 90° from that of the polarizing film put onto the screen for projecting pictures. Further, the polarizing film put onto the screen has a plane of polarization with the same phase as that of the projection light.

Outer incident light from all directions are polarized by letting them pass through a polarizing film before entering the screen. The polarizing film on the screen has a plane of polarization differing from that on the input portion of outer incident light by 90°, so the incident light on the screen reduces 100% and will not reflect.

A window structure equipped on the side walls of a cabin in the body of an airplane comprises of a window frame mounted on the body, a transparent board supported inside the body member of the window frame to seal the pressure inside the cabin, a dust cover mounted in a position closer to the cabin than the transparent board, and a shade which is able to take an up and down movement mounted close to the surface of the dust cover facing the cabin for blocking light, wherein the dust cover comprises of a transparent resin board and a non-elastic transparent film stuck on the surface of the transparent resin board facing the shade.

Further, a means for forming a window structure dust cover equipped on the side walls of a cabin in the body of an airplane is provided. It comprises of a transparent resin board, a non-elastic transparent film stuck on the surface of the transparent resin board facing the shade, and a polarizing film mounted inbetween the transparent resin board and the transparent film.

The transparent resin board forming the dust cover absorbs water and expands, but a non-elastic film is stuck onto it so that the board bends toward the direction forming a space between the shade, and will not interfere with the locus of the shade moving up and down.

### Brief Description of the Drawings

Fig. 1 is an explanatory view showing the embodiment of the present invention.
Fig. 2 is an explanatory view of the interior of an airplane.

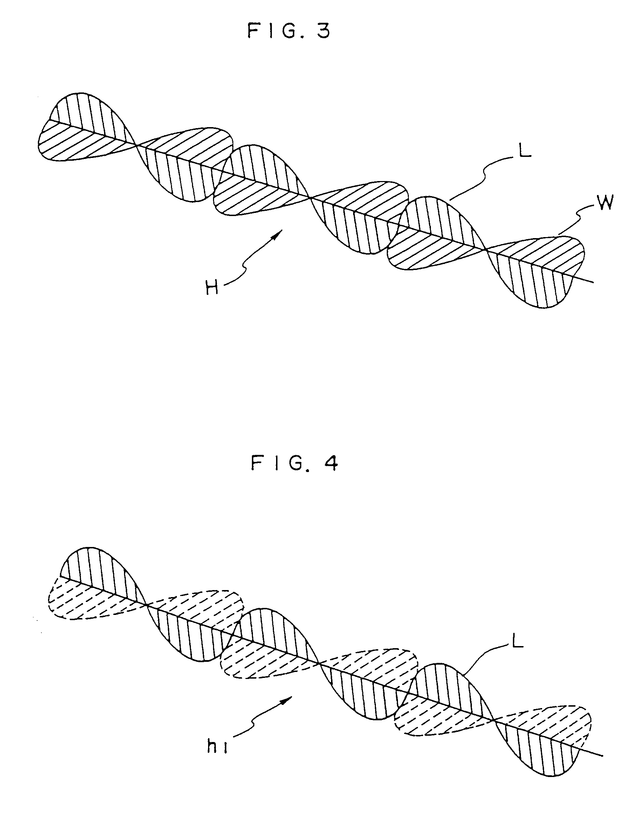

Fig. 3 is an explanatory view of the outer light.
Fig. 4 is an explanatory view of the transmission light.
Fig. 5 is an explanatory view of the reflection.
Fig. 6 is a cross-sectional view taken at line A-A of Fig. 2.
Fig. 7 is a cross sectional view of the window structure of the cabin side of the airplane body of the present invention;
Fig. 8 is a schematic view of the window frame;
Fig. 9 is an enlarged drawing of section D of Fig. 8;
Fig. 10 is a schematic view of the window frame;
Fig. 11 is an enlarged drawing of section E of Fig. 10;
Fig. 12 is a cross sectional view of the dust cover portion of the window structure of the present invention;
Fig. 13 is a perspective view of the window structure of an airplane and
Fig. 14 is a cross sectional view of the dust cover portion of the window structure of the prior art.

### Description of the Preferred Embodiments

An embodiment of the picture projecting device of the present invention being used inside an airplane will be explained with reference to the drawings.

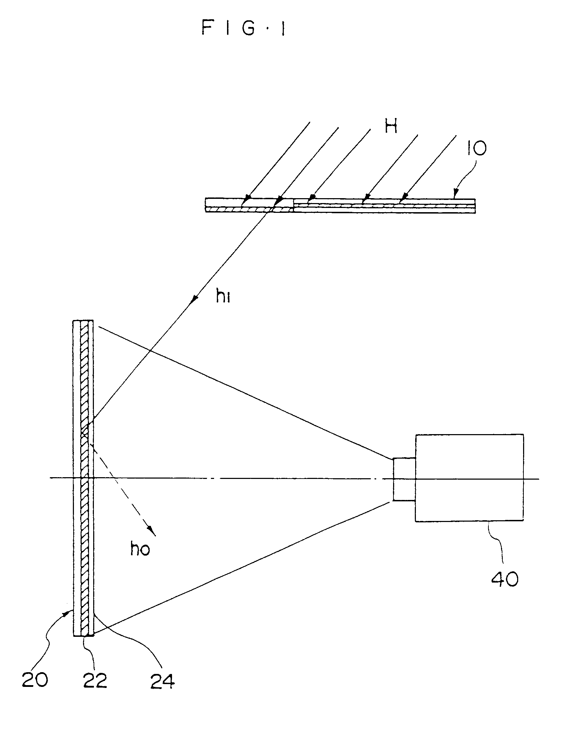

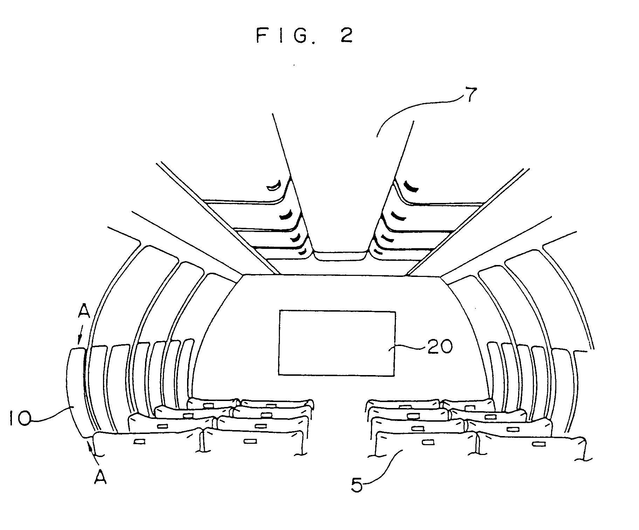

Fig. 1 is an explanatory view on how to use the present invention, and Fig. 2 is an explanatory view of the interior of an airplane.

Inside the airplane, a screen 20 for showing the picture projected from the projector 40 hung from the ceiling 7 is placed in front of the seats 5. Also, window structure 10 for taking in outer light are formed on the both side walls of the airplane.

The screen 20 is a reflecting type screen, and a first polarizing film 22 is stuck to the projecting side of screen 20. Further, a reflection preventing film 24 is stuck to the surface of the first polarizing film 22. It is preferable for the screen 20 to be in a cured state.

On the other hand, a second polarizing film 32 is stuck to the interior side of the window structure 10 of the airplane. A polarizing film having the same polarizing trait as the first polarizing film 22 is used as the second polarizing film 32. And the second polarizing film 32 is stuck to the window structure 10 so that its plane of polarization is right-angled to that of the first polarizing film 22. Further, the polarizing film 32 having the same trait as the first polarizing film 22 stuck onto the screen 20 will be stuck to the surface of the cover 8 of the room light (not shown) so that its plane of polarization is right-angled to that of the first polarizing film 22.

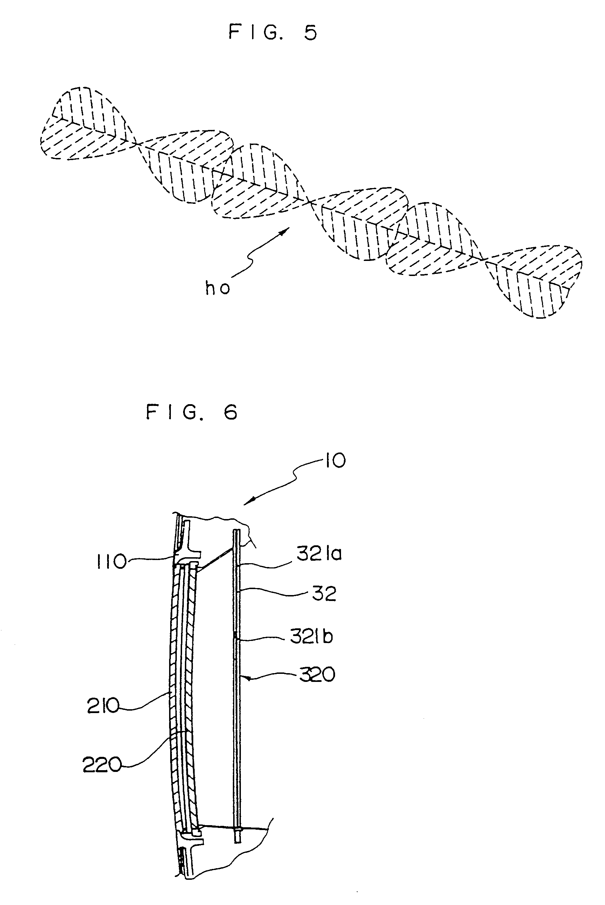

The attaching method of the second polarizing film 32 to the window structure 10 will now be explained with reference to Fig. 6 showing the cross sectional view taken at line A-A of Fig. 2.

A polarizing film is directly stuck onto the surface of the window glass. Or the window structure 10 shown in this embodiment has a structure where a middle panel 220 lies inbetween an outer panel 210 and an inner panel 320 which are in a piled state and being gathered by a window frame 110. Further, the inner panel 320 holds the second polarizing film 32 inbetween the two acrylic boards 321a, 321b to form a polarizing panel having high durability.

The operation of the picture projecting device placed inside an airplane having the above mentioned structure will now be explained. Outer light H such as sun light and room light consists of a vertical plane of polarization L and a horizontal plane of polarization W. This light H of every direction is directly polarized by the second polarizing film 32 stuck onto the window structure 10 thus being projected onto the surface of the screen 20 as a transmission light h1 having a vertical plane of polarization L. The plane of polarization of the first polarizing film 22 on the screen 20 being right-angled to that of the second polarizing film, the incident light reduces 100% and the reflection h0 reflecting from the screen 20 will be zero.

So, the surface of screen 20 will not be affected by outer light or the room light H, thus projecting the picture from the projector 40.

Further, when a liquid crystal type projector is used, the first polarizing film stuck onto the screen should have the same polarizing trait as that of the liquid crystal panel of the liquid crystal projector, and should be stuck to the screen with agreed plane of polarization. The second polarizing film on the window glass should be stuck in a way that the plane of polarization will be right-angled to that of the first polarizing film.

With a simple structure mentioned above, by putting a polarizing film on the input portion of outer light such as sun light and room light, and also by putting a polarizing film with the same polarizing trait as the ones on the input portion of outer light in a way that the plane of polarization will be right-angled to them, the influence of outer light to the screen surface could be cut out surely.

So by adopting the picture projecting device of the present invention, no matter what type of projector is used, there is no need to turn off the room light or to shut the window blind to make the room dark when projecting pictures in a bright room.

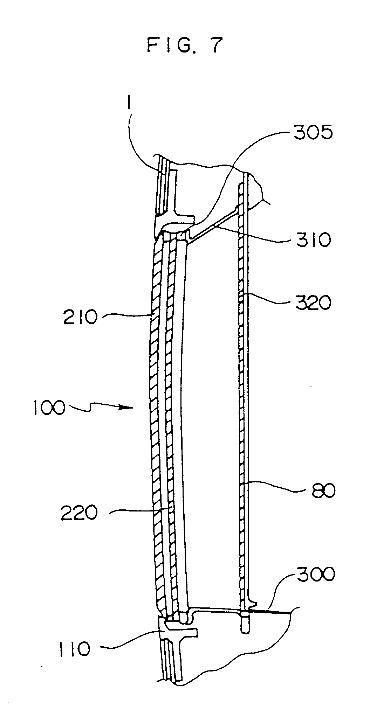

The window structure is now explained in Fig. 7 through Fig. 14.

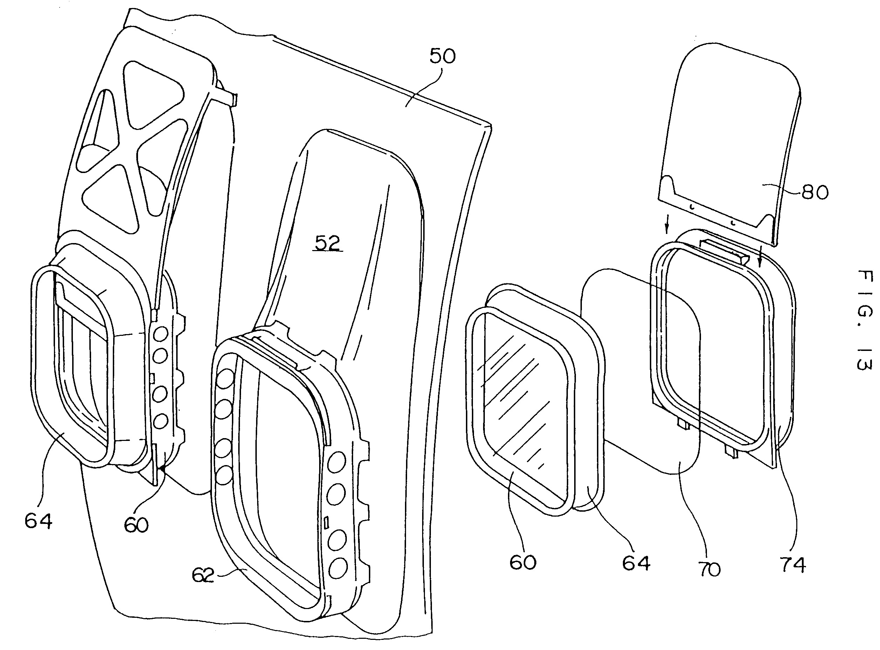

Fig. 13 is a perspective view of a window structure of an airplane. A projection portion 52 which projects in the outer direction from the airplane body is formed on the inner panel 50 mounted on the inside of the body, and a window frame 60 is fixed on the edge of the projection portion 52. An outer window frame 64 is mounted on the outer side of the window frame 60. A transparent board 66 is mounted on the outer window frame 64. The transparent board 66 has a structure where two plastic boards having high strength are piled up, so it is strong enough to bare the pressure inside the cabin.

A dust cover 70 for preventing dust and the like from entering is mounted on the inner window frame 74 which is mounted on the cabin side of the window frame 62, and a shade 80 is set slidably in up-and-down direction in the inner side of the dust cover. The passenger can move the shade 80 up and down in order to control the amount of incident light from outside.

Dust cover 70 is prefferably made of a light and strong material to achieve its aim, and an acrylic resin is used at present.

Acrylic resin has high transparency and its feature is good for a window material of airplanes, but it also has a character to absorb water easily.

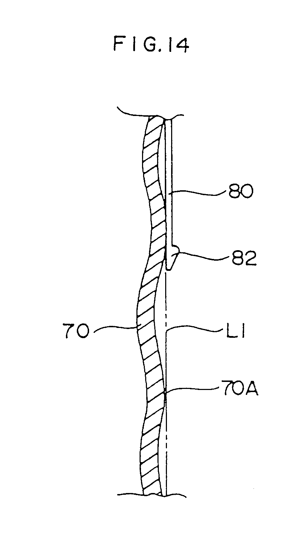

Fig. 14 (prior art) shows a state where the dust cover 70 made of acrylic resin absorbed water and expanded, and transformed to a wave shape.

Shade 80 is made of hard resin material and the like, having a handle portion 82 on the bottom end portion, and the passengers take hold of this handle portion 82 to move the shade up and down along a locus L₁.

When the projecting portion 70A of the transformed dust cover absorbing water and projecting to the inner cabin side interfere with the locus L₁ of the up and down movement of the shade 80, an excoriation will occur on the surface of the dust cover 70 by the shade 80.

When an excoriation is formed on the dust cover 70, outer light will perform a diffused reflection, lowering the transparency. The appearance will also be damaged, so they must be changed.

The object of the present invention is to offer a window structure equipped on side walls of a cabin in an airplane which solves the above inconveniences.

Fig. 7 is a cross sectional view of the window structure of the present invention.

The window structure shown as a whole by the number 100 has a window frame 110 mounted on the window opening portion of the body 1 of an airplane. On the window frame 110, a first transparent board 210 is mounted in the outer side and a second transparent board 220 is mounted in the inner side of the first transparent board.

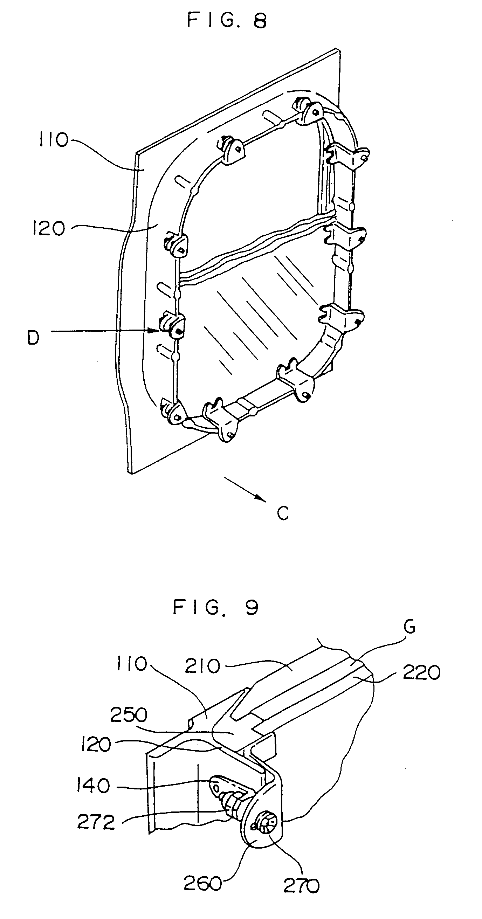

Fig. 8 shows the detail of the mounting structure of the window frame 110 and the first and second transparent boards 210, 220, and Fig. 9 is a magnified drawing of section D of Fig. 8.

The window frame 110 has a body member 120 which extends inwardly to the body of the airplane, and a suitable reinforcement member 130 is mounted on the outer side of the body member 120.

As is shown in Fig. 9, the first transparent board 210 and the second transparent board 220 is supported by a spacer ring 250 so that they have a space G inbetween. A fixture 140 is fixed onto the body member 120 of the window frame, and the spacer ring 250 is fixed against the fixture 140 by a spring clip 260 utilizing a bolt 270 and a nut 272. Ten spring clips 260 are mounted on the surrounding of the body member 120 of the window frame. By the operation of the spring clip 260, the spacer ring 250 for supporting the transparent boards 210, 220 will securely be fixed to the window frame 110.

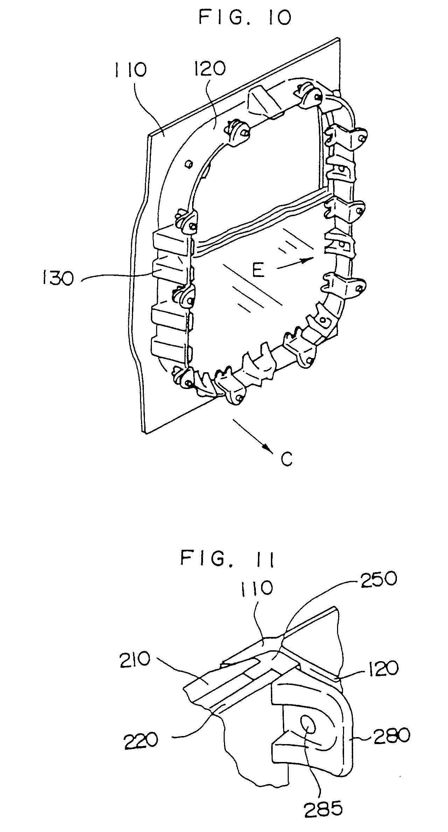

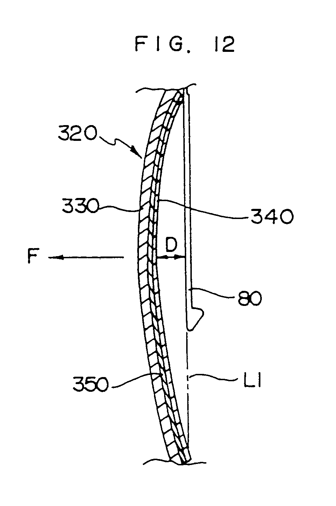

Fig. 10 shows the means to fix the second transparent board 220 to the spacer ring 250, and Fig. 11 is an enlarged drawing of the section E of Fig. 10.

A retainer member 280 is pressed onto the inner fringe portion of the second transparent board 220 whose outer surrounding fringe is supported by the spacer ring 250, and the retainer member 280 is fastened onto the body member 120 of the window frame by a bis 285. A serration could be formed in the connecting surface of the retainer member 280 and the body member 120, for example, to avoid the connecting surface from being loose.

As described above, the first transparent board 210 and the second transparent board 220 is fixed firmly to the window frame 110 supported by the spacer ring. The first transparent board 210 or the second transparent board 220 has enough strength to endure the pressure against the cabin alone, but by placing two boards with a space inbetween, the window portion could be sealed completely.

An inner window frame 310 is mounted on the inner side of the second transparent board 220 mounted on the window frame 110 through a seal 305. The inner window frame 310 will be mounted onto the interior member 300 of the cabin, and a dust cover 320 and a shade 80 will also be mounted thereto.

Fig. 12 is a cross sectional view showing the enlarged drawing of the structure of the dust cover 320 mounted on the nearest side of the cabin, and the shade 80.

The dust cover 320 is comprised of a transparent board body 330 made of acrylic resin and having a thickness of approximately 1.6 mm, and a transparent film 340 stuck on the inner cabin side of the acrylic board 330 having a thickness of approximately 0.25 mm and having no elasticity. A polarizing film 350 having a thickness of approximately 0.25 mm is inserted between the acrylic board 330 and the non elastic film 340. A transparent adhesive is used as the adhesive.

The acrylic resin board 330 expands by absorbing the water in the air or dew. When such expansion happens, the acrylic resin board 330 bends toward the outer direction of the airplane body shown by arrow F because the transparent film 340 having no elasticity is stuck onto it.

Therefore, a space D will be formed between the locus L₁ of the up and down movement of the shade 80 mounted on the cabin side of the dust cover 320 and the dust cover 320, and they will not interfere with one another.

So, the operation of the shade 80 will be smooth, and the damage of the dust cover 320 will be prevented.

By placing a polarizing film in the dust cover 320, the glaringness of outer light could be reduced, and the picture projected inside the cabin by a projector and the like could be easier to watch.

The window structure equipped on the side walls of the cabin in an airplane body of the present invention forms the dust cover mounted on the inner side of the transparent board set in the outermost side for sealing the pressure of the cabin by a transparent resin board by a transparent resin board and a non-elastic film stuck on the surface of the transparent resin board facing the shade. An acrylic resin which is light, having high strength and high transparency, is suitable for the material of the transparent resin board. However, acrylic resin has a character to expand by absorbing water. The present invention uses this character positively, and forms the dust cover so that it bends in the direction going away from the shade forming a space inbetween by sticking a non-elastic film on the surface of the acrylic resin board facing the shade.

By the structure described above, the shade will not interfere with the dust cover when the passenger moves the shade up and down to control the amount of outer incident light, and the dust cover could be free from damage by excoriation and the like.

Further, in a dust cover structure where a polarizing film is sandwiched between the transparent resin board and the non-elastic film, the outer sunlight and the like is introduced into the airplane in a polarized state, so the visibility of the image projected on the screen by a projector and the like could be improved.

## Claims

1. A picture projecting device comprising:
an optical projector (40),
a screen (20) having a polarizing film (22) on the surface where picture is projected, and
a polarizing film (32) to put onto the input portion of outer incident light,
wherein said polarizing film (32) to put onto the input portion of outer incident light has a plane of polarization with a phase differing from that of the polarizing film (22) on the screen (20) by 90°.

2. A picture projecting device claimed in Claim 1, wherein the polarizing film (22) put onto the screen (20) has a plane of polarization with the same phase as that of the projecting light.

3. A window structure equipped on the side walls of a cabin in the body of an airplane comprising:
a window frame (110) mounted on the body (1);
a transparent board (210, 220) supported inside the body member (120) of the window frame (110) to seal the pressure inside the cabin;
a dust cover (320) mounted in a position closer to the cabin than the transparent board; and
a shade (80) which is able to take an up and down movement mounted close to the surface of the dust cover (320) facing the cabin for blocking light;
wherein the dust cover (320) comprises of: a transparent resin board (330);
a non-elastic transparent film (340) stuck on the surface of the transparent resin board (330) facing the shade (80); and
a polarizing film (350) sandwiched between the transparent resin board (330) and the non-elastic transparent film (340).

4. A window structure equipped on the side walls of a cabin in the body of an airplane claimed in Claim 3, wherein;
the transparent resin board for sealing the pressure inside the cabin is a double structured transparent board (210, 220) made of acrylic resin.

5. A window structure equipped on the side walls of a cabin in the body of an airplane claimed in Claim 3 or Claim 4, wherein;
the transparent resin board (330) forming the dust cover (320) is a transparent board made of acrylic resin.
